# EUROPEAN PATENT SPECIFICATION

(11) **EP 2 775 236 B1**
(45) Date of publication and mention of the grant of the patent: **22.04.2020**
(21) Application number: 14157724.7
(22) Date of filing: 04.03.2014
(51) Int. Cl.: F25B 35/04, F25B 15/00, F25B 23/00, F25B 25/02

(54) **Household type refrigerator with an adsorption cycle system**
Haushaltskühlschränk mit einem Adsorptionszyklussystem
Réfrigérateur de type domestique avec un système de cycle d'absorption

(30) Priority: 07.03.2013 TR 201302766
(43) Date of publication of application: 10.09.2014
(73) Proprietor: Whirlpool Beyaz Esya Sanayi ve Ticaret Anonim Sirketi, 34349 Balmumcu-Besiktas-Istanbul (TR)
(72) Inventor: Gediz Ilis, Gamze, 45030 Manisa (TR); Mobedi, Moghtada, 35430 Gülbahçe Urla Izmir (TR); Ülku, Semra, 35430 Gülbahçe Urla Izmir (TR)
(74) Representative: Spina, Alessandro

(56) References cited:
- DE-A1-102008 057 110
- DE-A1-102010 040 085

## Description

### Technical Field

The invention is related to increasing the current cooling performance of the refrigerator by adding an adsorption cycle to the vapor compression cycle used in household type refrigerators.

### Prior Art

In order to increase the cooling performance of the prior art household type refrigerators, the current compressors are replaced with more expensive compressors having different technical features. This situation brings additional costs. In prior art refrigerators, a standard vapor compression cycle is used and in these kinds of refrigerators, the heat generated in the condensers is wasted and not used. Therefore, the cooling performance cannot be improved.

Patent application JP2005147550 (A) is related to a heat pump which has an adsorption type cooling device. In this heat pump, the main body comprises a booster which pressurizes the refrigerant gas, a condenser which condenses the refrigerant gas that is pressurized by the booster by the virtue of the heat exchange of a heated fluid such as exterior air, an evaporator which evaporates the gas condensed in the condenser by the heat exchange of a cooled fluid such as the interior air. Adsorption type refrigerator cools the refrigerant gas condensed in the condenser by an adsorber that is pressurized by a booster which is the renewing heat source with which the adsorbent material is connected.

During our literature and patent searches we have found out that the adsorbent beds are used in cooling cycles with vapor compression. However, in both cycles, the same refrigerant fluid (R600 a, R134a etc.) is used.

Document DE102010040085A1 discloses a household type refrigerator with a refrigeration system comprising a compression refrigerating machine, which comprises a first refrigerant circuit, and having a sorption refrigerator, which has a second refrigerant circuit. Moreover, DE102010040085A1 discloses a household type refrigerator according to the preamble of claim 1.

Document DE102008057110A1 discloses a cooling device comprising a compression refrigerator, provided with a condenser, a compressor for compressing a coolant and an evaporator which decompresses the coolant in a refrigerant circuit, and a thermally driven refrigerator provided for reduction of temperature of the coolant and designed as an absorption refrigerator and an adsorption refrigerator.

Although we have not come across with a patent describing the adsorption cycle subject to our invention during our patent search, the patent application 2011/03854, registered in Turkish Patent Institute, is related to a refrigerator which comprises a body, one or more than one door located at the front of the body, a compressor providing the cooling cycle, a freezer or cooler division located within the body, an evaporator which cools the division and composed of cooling pipe and wings, an evaporator division wherein the evaporator is placed, a fan which is located on the top of the evaporator and circulates the air in the division by passing it over the evaporator and an air distributer which provides a homogenous air flow through over the evaporator.

The patent application 2008/04594 registered to Turkish Patent Institute is related to a refrigerator which comprises an evaporator obtained by bending a pipe -which has a valve into which the refrigerant fluid coming from the cooling cycle enters and an exit where the fluid returns to the cooling cycle- many times on a cooling plane and additionally a primary extension of the pipe located between the valve and the exit and at least one primary wing fixed to the said primary extension in order to form an auxiliary cooling element.

### Object of the Invention

The main objective of the invention is increasing the current cooling performance of the refrigerator by adding adsorption cycle in addition to the vapor compression cooling cycle used in household type refrigerators.

Another object of the invention is to use the condenser's heat -which is not currently used-for the adsorption cycle which is integrated to the system in addition to the standard vapor compression cycle.

Another object of the invention is to increase the cooling performance of the system while protecting the current cycle features (compressor power, evaporator efficiency etc.).

Another object of the invention is to increase the cooling performance with an additional cycle (adsorption cycle) which will operate with an entirely environmentally friendly system.

Various material pairs (water-silica gel, water-zeolite etc.) may be used in adsorption cycle. The adsorption cycle subject to the invention operates in vacuum. It is a system independent from the current system (vapor compression cycle). This cycle system solely uses the waste condenser's heat. Refrigerant fluids never mix to each other.

In order to achieve the objectives mentioned above, a household type refrigerator according to claim 1 is provided.

### Figures Assisting the Description of the Invention

Figure 1 is the schematic view of the standard vapor compression cycle used in prior art refrigerators.
Figure 2 is the schematic view showing the adsorption cycle subject to the invention which is integrated to the system in addition to the standard cycle.
Figure 3 is the schematic view showing alternative embodiment of the adsorption cycle subject to the invention which is integrated to the system in addition to the standard cooling cycle.

### Reference Numbers

**1.** Compressor
**2.** Condenser
**3.** Evaporator
**4.** Capillary tube
**5.** Adsorbent bed
**6.** Condenser
**7.** Evaporator
**8.** Expansion valve

### Detailed Description of the Invention

The invention is related to increasing the current cooling performance of the refrigerator by adding adsorption cycle in addition to the vapor compression cycle used in household type refrigerators.

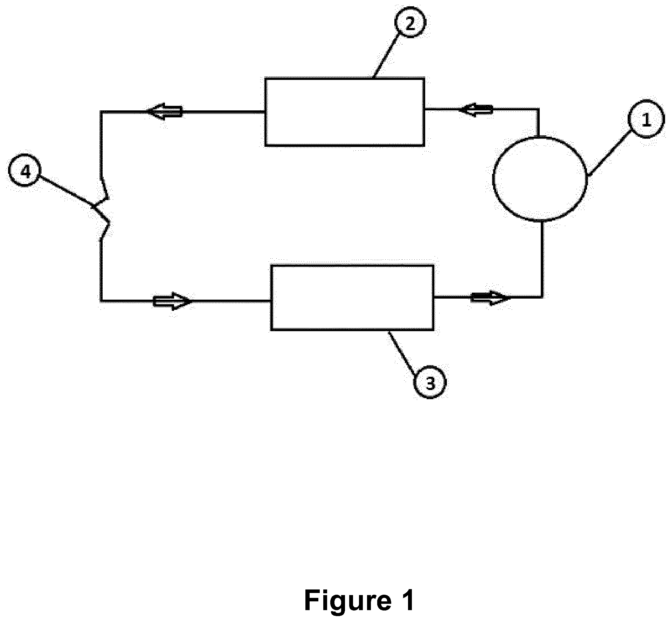

In Figure 1, the schematic view of the standard vapor compression cycle used in prior art refrigerators is given. The standard vapor compression cycle used in prior art refrigerators comprises a compressor (1) which compresses the refrigerant fluid to the condenser (2) pressure; a condenser (2) which releases the heat out during of the cooling cycle, an evaporator (3) which provides the cooling effect and a capillary tube (4) which decreases the pressure of refrigerant fluid to the pressure of evaporator (3). In a household type refrigerator, the compressor which operates with electric power compresses the refrigerant fluid (R600 a, R134a etc.) to the condenser (2) pressure. The pressure of the compressed gas is decreased to the evaporator (3) pressure by passing from the capillary tube (4) and thus, the cooling effect is obtained.

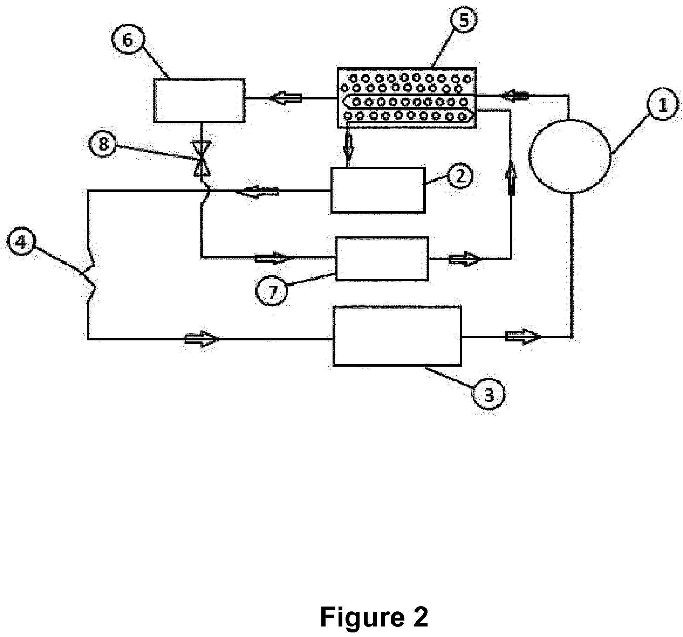

In Figure 2, the schematic view showing the adsorption cycle subject to the invention which is integrated to the system in addition to the standard cooling cycle is given. The adsorption cycle subjects to the invention comprises at least one adsorbent bed (5) which is filled with adsorbents such as silica gel, zeolite etc., at least one condenser (6) which releases out the heat of the new adsorption cycle, at least one evaporator (7) which creates the cooling effect and at least one expansion valve (8) which decreases the pressure of the refrigerant fluid (water etc.) to the evaporator pressure and said system operates in vacuum. The adsorption cycle with adsorption subject the invention is a closed cycle and has its unique evaporator (7) and condenser (6). Adsorptive (water etc.) is circulated in the evaporator (7) and condenser (6) in vacuum. It is completely different from the vapor compression cycle. The adsorbent bed (5) filled with adsorbent (silica gel, zeolite etc.) adsorbs the heat of the condenser (2) and uses it in desorption (drying). The cooling effect is obtained in the evaporator (7) of the adsorption cycle. By using this effect in the refrigerator, the cooling performance of the refrigerator is improved.

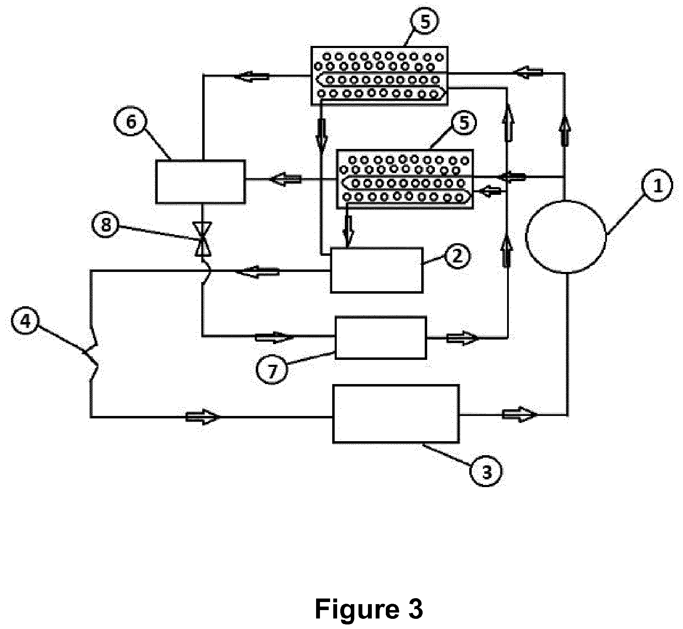

In the cooling cycle subject to the invention, different types of condenser and evaporator designs may be used and the cooling performance of the whole system can be improved by improving the cooling performance of the system with adsorption. Additionally, more than one adsorbent bed (5) may be used in the invention. One bed(s) may operate in desorption while the other bed(s) may operate in adsorption position. In figure 3, the schematic representation of the system in which more than one bed may be used is given.

Household type air conditioners and the cooling systems of buildings are the other systems where the cooling system subject to the invention may be used.

## Claims

1. A household type refrigerator with an adsorption cycle system and a vapor compression cycle system, wherein said adsorption cycle system is configured to work completely independent from the vapor compression cycle system and is added to the system in addition to the vapor compression cycle,
said vapor compression cycle system comprising:
a compressor (1) to compress the refrigerant fluid to condenser pressure,
a condenser (2) to release the heat out during cooling cycle,
an evaporator (3) to provide the cooling effect,
a throttle device (4) to decrease the pressure of the refrigerant fluid to the pressure of the evaporator, and
said adsorption cycle system being a closed loop comprising:
at least one adsorbent bed (5) filled with adsorbents,
at least one condenser (6) which releases the heat of cycle out,
at least an evaporator (7) providing the cooling effect, and
at least one throttle device (8) which decreases the pressure of the refrigerant fluid to the pressure of the evaporator,
the refrigerator being **characterized in that** the throttle device (4) of the vapor compression system is a capillary tube (4), the at least one throttle device (8) of the adsorption cycle system is an expansion valve, and the absorbent bed (5) is connected and configured to adsorb the heat of the condenser (2) of the vapor compression cycle system and to use it in desorption.

2. The adsorption cycle according to claim 1, **characterized in that** an adsorptive is circulated in the evaporator (7) and condenser (6) in vacuum.

3. The adsorption cycle according to claim 1, **characterized in that** adsorbents such as silica gel, zeolite are present in the adsorbent bed (5).

4. The adsorption cycle according to any of the preceding claims, **characterized in that** the adsorptive is water.

## Patentansprüche

1. Haushaltskühlschrank mit einem Adsorptionszyklussystem und einem Dampfkompressionszyklussystem, wobei das Adsorptionszyklussystem konfiguriert ist, um vollständig unabhängig von dem Dampfkompressionszyklussystem zu arbeiten und zu dem System zusätzlich zu dem Dampfkompressionszyklus hinzugefügt ist,
wobei das Dampfkompressionszyklussystem umfasst:
einen Kompressor (1), um das Kühlmittelfluid auf einen Kondensatordruck zu komprimieren,
einen Kondensator (2), um die Wärme während eines Abkühlungszyklus freizugeben,
einen Verdampfer (3), um den Abkühlungseffekt bereitzustellen,
eine Drosselvorrichtung (4), um den Druck des Kühlmittelfluids auf den Druck des Verdampfers zu verringern, und
wobei das Adsorptionszyklussystem ein geschlossener Kreislauf ist und umfasst:
zumindest ein Adsorptionsmittelbett (5), das mit Adsorptionsmitteln gefüllt ist, zumindest einen Kondensator (6), der die Wärme des Zyklus freigibt,
zumindest einen Verdampfer (7), der den Abkühlungseffekt bereitstellt, und
zumindest eine Drosselvorrichtung (8), die den Druck des Kühlmittelfluids auf den Druck des Verdampfers verringert,
wobei der Kühlschrank **dadurch gekennzeichnet ist, dass** die Drosselvorrichtung (4) des Dampfkompressionssystems eine kapillare Röhre (4) ist, die zumindest eine Drosselvorrichtung (8) des Adsorptionszyklussystems ein Expansionsventil ist, und das ein Adsorptionsmittelbett (5) verbunden und konfiguriert ist, um die Wärme des Kondensators (2) des Dampfkompressionszyklussystems zu adsorbieren und sie bei einer Desorption zu verwenden.

2. Adsorptionszyklus nach Anspruch 1, **dadurch gekennzeichnet, dass** ein Adsorptionsmittel in dem Verdampfer (7) und in dem Kondensator (6) im Vakuum zirkuliert wird.

3. Adsorptionszyklus nach Anspruch 1, **dadurch gekennzeichnet, dass** Adsorptionsmittel, wie beispielsweise Kieselgel, Zeolith, in dem Adsorptionsmittelbett (5) vorhanden sind.

4. Adsorptionszyklus nach einem der vorstehenden Ansprüche, **dadurch gekennzeichnet, dass** Adsorptionsmittel Wasser ist.

## Revendications

1. Réfrigérateur de type ménager avec un système de cycle d'adsorption et un système de cycle de compression de vapeur, dans lequel ledit système de cycle d'adsorption est configuré pour fonctionner complètement indépendamment du système de cycle de compression de vapeur et est ajouté au système en complément du cycle de compression de vapeur,
ledit système de cycle de compression de vapeur comprenant :
un compresseur (1) pour compresser le fluide réfrigérant à une pression de condensateur,
un condensateur (2) pour évacuer la chaleur pendant un cycle de refroidissement,
un évaporateur (3) pour fournir l'effet de refroidissement,
un dispositif d'étranglement (4) pour réduire la pression du fluide réfrigérant à la pression de l'évaporateur, et
ledit système de cycle d'adsorption étant une boucle fermée comprenant :
au moins un lit d'adsorbants (5) rempli d'adsorbants,
au moins un condensateur (6) qui évacue la chaleur de cycle,
au moins un évaporateur (7) fournissant l'effet de refroidissement, et
au moins un dispositif d'étranglement (8) qui réduit la pression du fluide réfrigérant à la pression de l'évaporateur,
le réfrigérateur étant **caractérisé en ce que** le dispositif d'étranglement (4) du système de compression de vapeur est un tube capillaire (4), l'au moins un dispositif d'étranglement (8) du système de cycle d'adsorption est une vanne de détente, et le lit d'adsorbants (5) est raccordé et configuré pour adsorber la chaleur du condensateur (2) du système de cycle de compression de vapeur et pour l'utiliser en désorption.

2. Cycle d'adsorption selon la revendication 1, **caractérisé en ce qu'**un adsorbeur est circulé dans l'évaporateur (7) et le condensateur (6) sous vide.

3. Cycle d'adsorption selon la revendication 1, **caractérisé en ce que** des adsorbants, comme du gel de silice et de la zéolithe, sont présents dans le lit d'adsorbants (5).

4. Cycle d'adsorption selon l'une quelconque des revendications précédentes, **caractérisé en ce que** l'adsorbeur est de l'eau.
